# EUROPÄISCHE PATENTSCHRIFT

(11) **EP 1 353 054 B1**
(45) Veröffentlichungstag und Bekanntmachung des Hinweises auf die Patenterteilung: **21.09.2005**
(21) Anmeldenummer: 03003686.7
(22) Anmeldetag: 18.02.2003
(51) Int. Cl.: F02C 7/04, B64D 33/02

(54) **Turboprop-Flugzeugtriebwerk**
Turboprop engine
Turbopropulseur

(30) Priorität: 09.04.2002 DE 10215551
(43) Veröffentlichungstag der Anmeldung: 15.10.2003
(73) Patentinhaber: Rolls-Royce Deutschland Ltd & Co KG, 15827 Dahlewitz (DE)
(72) Erfinder: Mundt, Christian, Dr., 15723 Eichwalde (DE); Negulescu, Dimitri, 14163 Berlin (DE); Rose, Marco, Dr., 09599 Freiberg (DE); Spieweg, Rene, Dr., 14197 Berlin (DE)
(74) Vertreter: Weber, Joachim

(56) Entgegenhaltungen:
- US-A- 5 483 791
- US-A- 5 725 180

## Beschreibung

Die Erfindung bezieht sich auf ein Turboprop-Flugzeugtriebwerk mit einem äußeren Lufteinlass sowie mit einem sich daran anschließenden inneren Kanalsystem zur Zuführung von Luft zu einem Kompressor.

Die vom Turboprop-Flugzeugtriebwerk benötigte Luft wird durch zumindest einen äußeren Lufteinlass zugeführt und nachfolgend durch jeweils ein inneres Kanalsystem dem Kompressor zugeführt.

Derartige Lufteinlässe können entweder nur einen äußeren Lufteinlass sowie nur ein zugeordnetes Kanalsystem oder mehrere umfassen. Der Stand der Technik zeigt diese Luftführungssysteme als Chin-Einlässe oder Scoop-Einlässe. Diese können mehrflutig bzw. verzweigt sein (z.B. der Zweiflut-Einlass oder bifurcated inlet).

Bekannte Konstruktionen zeigen beispielsweise die US-Patente 5,725,180 und 4,617,028.

Bei den bekannten Konstruktionen soll erreicht werden, dass die zugeführte Luft mit möglichst großer Gleichförmigkeit und geringem Drall am Eintritt des Kompressors ansteht. Der Gesamtdruckverlust zwischen Einlauflippe und dem Kompressoreintritt soll somit möglichst gering sein. Die Effizienz und die Stabilität des Kompressors werden durch den Gesamtdruckverlust, die Gleichförmigkeit der Zuführung der Luft und den Drall der Luftströmung beeinflusst.

Aus diesem Grunde wurde im Stand der Technik die konstruktive Gestaltung der Wände der Luftzuführung entsprechend ausgebildet. Das gesamte System sowohl des äußeren Lufteinlasses als auch des daran anschließenden inneren Kanalsystems ist so ausgestaltet, dass die Luftführung parallel zur Mittelachse des Triebwerks (Maschinenachse) erfolgt. Das Eintrittsleitrad des Kompressors lenkt dann die Strömung in eine für den Kompressor geeignete Richtung um, in dem es der Luftströmung eine entsprechende Umfangskomponente in Drehrichtung des Kompressors auferlegt.

Beim Stand der Technik erweist es sich als nachteilig, dass die vor dem äußeren Lufteinlass anströmende Luft durch den rotierenden Propeller abgelenkt wird und einen Drall aufweist. Dieser Drall wird durch die konstruktive Ausgestaltung des äußeren Lufteinlasses sowie des daran anschließenden inneren Kanalsystems beim Stand der Technik wieder beseitigt. In Abhängigkeit von der Drehrichtung des Kompressors und des Propellers können sich hierbei unerwünschte Effekte ergeben, die zu einer Verschlechterung des Wirkungsgrades führen.

Weiterhin erweist es sich als nachteilig, dass die Wechselwirkung der drallbehafteten Strömung in den axial ausgerichteten Kanalwänden des aus dem Stand der Technik bekannten Kanalsystems zu einer verstärkten Bildung von Rezirkulationsgebieten und Längswirbeln in der Strömung innerhalb des Kanalsystems führt. Hieraus ergibt sich wiederum eine Verschlechterung des Wirkungsgrades sowie eine Verschlechterung des Gleichförmigkeitsparameters der Strömung am Kompressoreintritt sowie einer Erhöhung des Gesamtdruckverlustes.

Aus der US-A 5 483 791 ist ein Turboprop-Triebwerk bekannt, bei welchem ein äußerer Lufteinlaß vorgesehen ist, der in ein inneres Kanalsystem übergeht. Der Lufteinlaß befindet sich unterhalb des Triebwerks und mündet in eine kreisförmige Ringkammer.

Der Erfindung liegt die Aufgabe zu Grunde, ein Turboprop-Flugzeugtriebwerk der eingangs genannten Art so weiterzubilden, dass die Luftzufuhr zu dem Kompressor ohne Verluste erfolgen kann und gleichzeitig die stabile Arbeitsweise des Kompressors unterstützt wird.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit vorgesehen, dass das zumindest eine innere Kanalsystem zur Mittelachse des Triebwerks schraubenförmig ausgebildet ist.

Die erfindungsgemäße Ausgestaltung zeichnet sich durch eine Reihe erheblicher Vorteile aus.

Durch die besondere Formgebung des Kanalsystems wird die Luftführung vom äußeren Lufteinlass zum Kompressor in vorteilhafter Weise beeinflusst.

Erfindungsgemäß ergibt sich eine Reduzierung des Druckverlustes im Kanalsystem sowie eine Reduzierung der Ungleichförmigkeit der Strömung, verglichen mit den aus dem Stand der Technik bekannten Ausgestaltungen. Hieraus ergibt sich eine Verbesserung der Leistung des gesamten Lufteinlasssystems. Die Strömungsführung wird insgesamt verbessert, wobei sich eine Verringerung der lokalen Effekte, beispielsweise der lokalen Umlenkungen und Wirbelbildungen ergibt. Hierdurch wiederum erfolgt eine Minimierung der Wechselwirkung der Luftströmung mit den feststehenden Wänden des Lufteinlasses sowie des inneren Kanalsystems sowie eine Minimierung der Bildung von Sekundärströmungen (Wirbel, Ablösungen etc.).

Insgesamt ergibt sich erfindungsgemäß eine Erhöhung des Wirkungsgrades des Einlasses oder eine Minimierung der Verluste. Diese führt zu einer Verbesserung des spezifischen Brennstoffverbrauchs des Triebwerks sowie zu einer Verbesserung der Qualität der Anströmung des Kompressors.

Ein weiterer, wesentlicher Vorteil der Erfindung liegt dann vor, wenn der Drehrichtungssinn des Propellers identisch mit dem des Kompressors ist. In diesem Fall unterstützt die spezielle Formgebung die Propellerdrehrichtung der Luftströmung. Der Drall der einströmenden Luftströmung wird erhalten und entsprechend optimiert, wodurch sich eine verbesserte Anströmung des Kompressors, insbesondere des Eintrittsbereichs des Kompressors ergibt.

Erfindungsgemäß ist es somit möglich, den Drall vom äußeren Lufteinlass bis zur Zuführung der Luftströmung zu dem Kompressor entsprechend auszulegen und durch die Gestaltung des Kanalsystems zu optimieren, wobei der Drall hierdurch abgemindert oder verstärkt werden kann. Durch die verbesserte Anströmung des Kompressors ist es möglich, auf ein Eintrittsleitrad des Kompressors zu verzichten. Hierdurch ergibt sich eine Vereinfachung des Aufbaus des gesamten Triebwerks sowie eine erhebliche Gewichtseinsparung. Darüber hinaus ergibt sich eine weitere Verbesserung des Gesamtwirkungsgrades durch den Wegfall des Druckverlustes am Eintrittslaufrad.

Die erfindungsgemäße Grundidee besteht somit darin, das Lufteinlasssystem so zu gestalten, dass der durch den Propeller eingebrachte Drall weitgehend erhalten bleibt. Erfindungsgemäß werden somit das innere Kanalsystem sowie in bevorzugter Weiterbildung der äußere Lufteinlass in Richtung der drallbehafteten Strömung ausgerichtet. Der spezifische Verlauf des erfindungsgemäßen Luftzuführungssystems (Verdrehwinkel in Abhängigkeit von der axialen Position, bezogen auf die Mittelachse des Triebwerks) kann somit nach dem Drehimpulserhaltungssatz der Strömungsmechanik optimiert werden. Es ergibt sich somit eine Form des inneren Kanalsystems sowie auch des äußeren Lufteinlasses, welche sich schraubenlinienförmig oder korkenzieherartig um die Mittelachse des Triebwerks anordnet. Die konstruktive Ausgestaltung der entsprechenden Kanäle und Luftführungen folgt somit der Drallform der Luftströmung, es ergibt sich ein "twisted duct".

Im Folgenden wird die Erfindung anhand eines Ausführungsbeispiels in Verbindung mit der Zeichnung beschrieben. Dabei zeigt:
- Fig. 1: eine schematische perspektivische Darstellung des erfindungsgemäßen Luftführungssystems mit äußerem Lufteinlass und innerem Kanalsystem,
- Fig. 2: eine Draufsicht auf die Ausgestaltung gemäß Fig. 1,
- Fig. 3: eine Vorderansicht der Anordnung gemäß den Fig. 1 und 2,
- Fig. 4: eine Rückansicht der in den Fig. 1 bis 3 gezeigten Ausgestaltungsform, und
- Fig. 5: eine schematische Seiten-Schnittansicht des Luftführungssystems.

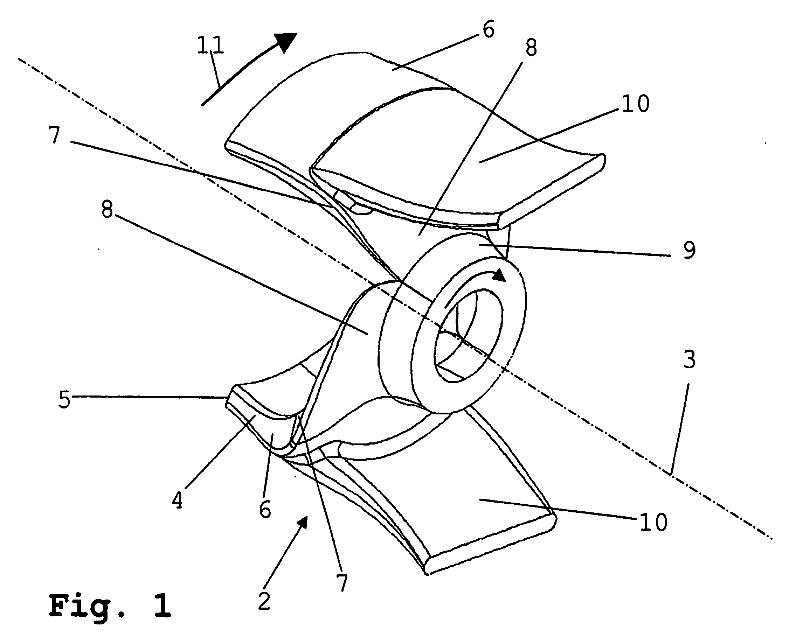

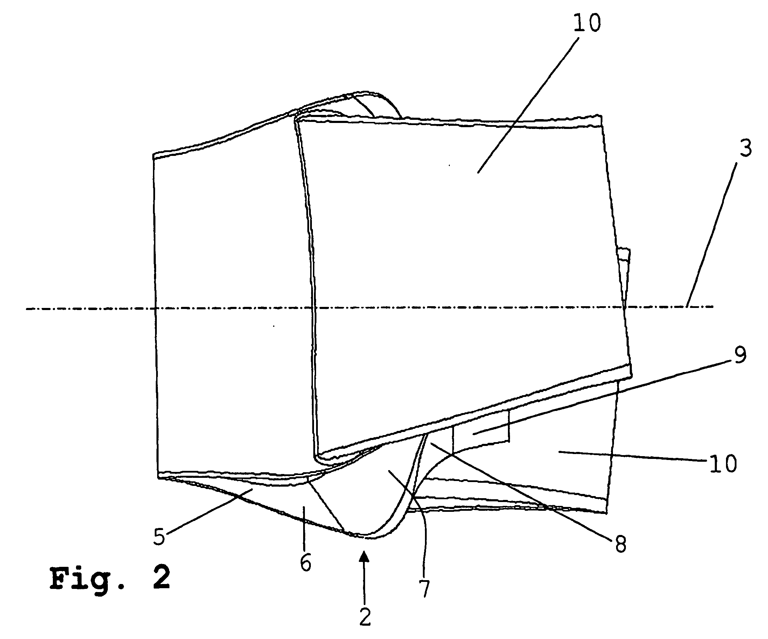

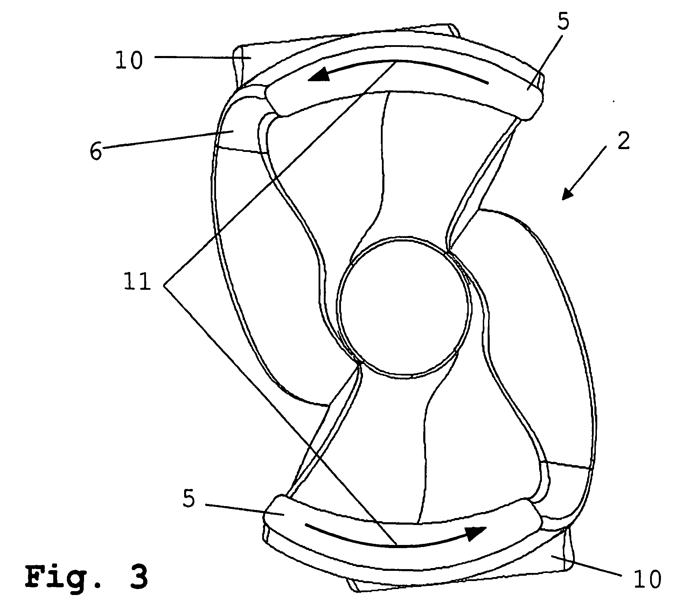

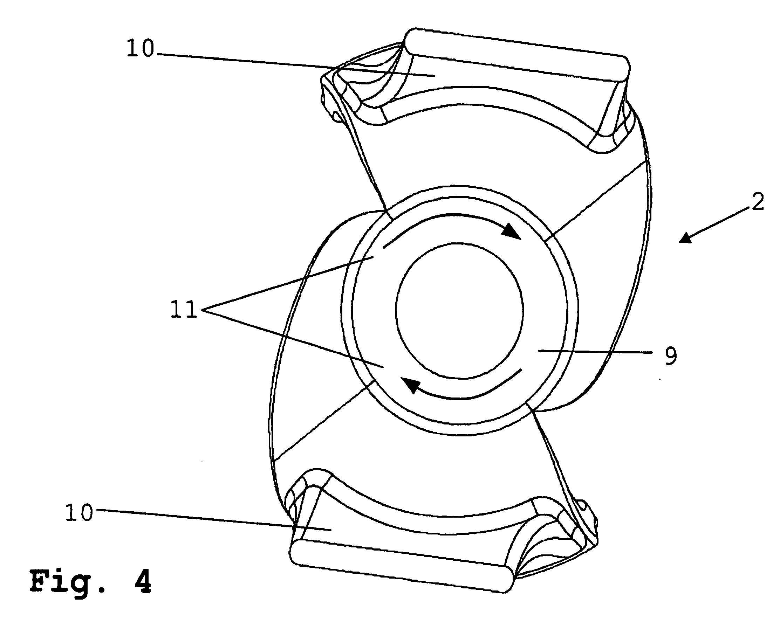

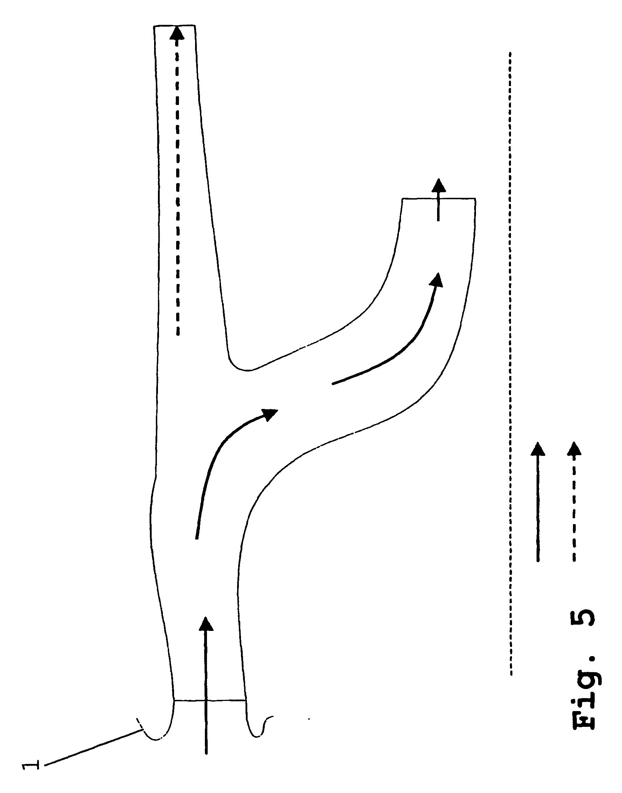

In Fig. 5 ist ein äußerer Lufteinlass 1 dargestellt, an den sich ein inneres Kanalsystem anschließt. Die Fig. 1 bis 4 beginnen erst mit der Darstellung des engsten Strömungsquerschnitts 5, sie zeigen im Einzelnen das innere Kanalsystem 2. Die Mittelachse des Triebwerks ist mit dem Bezugszeichen 3 versehen.

Im Einzelnen umfasst der Lufteinlass einen engsten Strömungsquerschnitt 5, der in einen Diffusor 6 übergeht. Auf den Diffusor 6 folgt eine Umlenkung 7, gefolgt von einem Konfusor 8, der in einen Ringkanal 9 mündet. An den Ringkanal 9 schließt sich ein nicht dargestellter Kompressor an.

Weiterhin ist ein Partikelseparator 10 vorgesehen (Einrichtung zur Abscheidung der mit der Strömung eingebrachten Partikel), der in Verlängerung des Diffusorteils (Diffusor 6) angeordnet ist.

Der generelle Aufbau sowohl des äußeren Lufteinlasses als auch des inneren Kanalsystems ist aus dem Stand der Technik bekannt, sodass auf detaillierte Beschreibungen der Führung der Luftströmung verzichtet werden kann.

Erfindungsgemäß ergibt sich die bereits beschriebene schraubenlinienförmige oder korkenzieherartige Ausgestaltung. Die Figuren 1, 3 und 4 zeigen mit den Teilen in schematischer Darstellung die Drallrichtung 11, in welcher die gesamte Anordnung um die Mittelachse 3 verwunden ist.

### Bezugszeichenliste

- 1: Äußerer Lufteinlass (= Einlauflippe)
- 2: Inneres Kanalsystem
- 3: Mittelachse
- 4 5: Engster Strömungsquerschnitt
- 6: Diffusor
- 7: Umlenkung
- 8: Konfusor
- 9: Ringkanal
- 10: Partikelseparator
- 11: Drallrichtung

## Patentansprüche

1. Turboprop-Flugzeugtriebwerk mit zumindest einem äußeren Lufteinlass (1) sowie mit zumindest einem sich daran anschließenden inneren Kanalsystem (2) zur Zuführung von Luft zu einem Kompressor, **dadurch gekennzeichnet, dass** das innere Kanalsystem (2) zur Mittelachse (3) des Triebwerks schraubenlinienförmig ausgebildet ist.

2. Turboprop-Flugzeugtriebwerk nach Anspruch 1, **dadurch gekennzeichnet, dass** ein Verdrehwinkel der schraubenlinienförmigen Ausgestaltung in Abhängigkeit von dem durch den Propeller eingebrachten Drall der Luftströmung bestimmt ist.

3. Turboprop-Flugzeugtriebwerk nach Anspruch 2, **dadurch gekennzeichnet, dass** der Verdrehwinkel zur Erhaltung des durch den Propeller eingebrachten Dralls der Luftströmung bestimmt ist.

4. Turboprop-Flugzeugtriebwerk nach einem der Ansprüche 2 oder 3, **dadurch gekennzeichnet, dass** der Verdrehwinkel in Richtung des Dralls der in den äußeren Lufteinlass (1) strömenden Luft ausgerichtet ist.

5. Turboprop-Flugzeugtriebwerk nach einem der Ansprüche 1 bis 4, **dadurch gekennzeichnet, dass** der Kompressor kein Eintrittslaufrad umfasst.

## Claims

1. Turboprop aircraft engine with at least one outer air intake (1) and with at least one downstream inner duct system (2) for the delivery of air to a compressor, **characterized in that** the inner duct system (2) spirals around the center axis (3) of the engine.

2. Turboprop aircraft engine in accordance with Claim 1, **characterized in that** a twist angle of the spiral arrangement is determined in dependence of the swirl of the airflow imparted by the propeller.

3. Turboprop aircraft engine in accordance with Claim 2, **characterized in that** the twist angle is destined for the conservation of the swirl of the airflow imparted by the propeller.

4. Turboprop aircraft engine in accordance with one of the Claims 2 or 3, **characterized in that** the twist angle is orientated in the direction of the swirl of the air flowing into the outer air intake (1).

5. Turboprop aircraft engine in accordance with one of the Claims 1 to 4, **characterized in that** the compressor has no inlet rotor.

## Revendications

1. Turbopropulseur aéronautique avec au moins une prise d'air extérieure (1) suivie au moins d'un système de canaux intérieur (2) destiné à introduire de l'air dans un compresseur,
**caractérisé en ce que** le système de canaux intérieur (2) a une forme hélicoïdale et entoure l'axe central (3) du moteur.

2. Turbopropulseur aéronautique selon la revendication 1, **caractérisé en ce qu'**un angle de torsion de la configuration hélicoïdale est déterminé en fonction du tourbillonnement du flux d'air généré par l'hélice.

3. Turbopropulseur aéronautique selon la revendication 2, **caractérisé en ce que** l'angle de torsion est destiné à maintenir le tourbillonnement du flux d'air généré par l'hélice.

4. Turbopropulseur aéronautique selon une des revendications 2 ou 3, **caractérisé en ce que** l'angle de torsion est orienté dans le sens du tourbillonnement de l'air s'écoulant dans la prise d'air extérieure (1).

5. Turbopropulseur aéronautique selon une des revendications 1 à 4, **caractérisé en ce que** le compresseur n'a pas de rotor d'entrée.
